# EUROPEAN PATENT SPECIFICATION

(11) **EP 0 511 713 B1**
(45) Date of publication and mention of the grant of the patent: **01.10.1997**
(21) Application number: 92201193.7
(22) Date of filing: 28.04.1992
(51) Int. Cl.: C08G 67/02

(54) **Catalyst compositions**
Katalysatorzusammensetzungen
Compositions de catalyseurs

(30) Priority: 01.05.1991 NL 9100747
(43) Date of publication of application: 04.11.1992
(73) Proprietor: SHELL INTERNATIONALE RESEARCH MAATSCHAPPIJ B.V., 2596 HR Den Haag (NL)
(72) Inventor: Keijsper, Johannes Jacobus, NL-1031 CM Amsterdam (NL)

(56) References cited:
- EP-A- 0 248 483
- EP-A- 0 404 228

## Description

The invention relates to novel catalyst compositions which are suitable for use in a process for the preparation of polymers of carbon monoxide with one or more olefinically unsaturated compounds, and to such a process.

It is known that linear polymers of carbon monoxide with one or more olefinically unsaturated compounds, in which polymers the units originating from carbon monoxide and the units originating from the olefinically unsaturated compounds occur in a substantially alternating arrangement, can be prepared by contacting the monomers at elevated temperature and pressure with a solution of a catalyst composition in a diluent in which the polymers are insoluble or virtually insoluble and which catalyst composition contains a Group VIII metal component and a dentate ligand comprising at least two phosphorus-, nitrogen- and/or sulphur-containing dentate groups through which the dentate ligand can complex with the Group VIII metal component.

During the polymerization the polymers are obtained in the form of a suspension in the diluent. A problem with the above-described polymer preparation is reactor fouling. During the polymerization, part of the polymers formed is deposited on parts of the reactor situated below the surface of the liquid, such as the reactor wall, the baffles, the stirrer shaft, the stirrer blades, the cooling and heating coils and the dip tubes. These deposited polymers remain in the reactor after the polymer suspension has been discharged from the reactor and cannot be removed by washing the reactor with diluent. In some cases this reactor fouling can be very serious and in extreme cases can be as high as about 50%, which means that only about 50% of the prepared polymer leaves the reactor in the form of a suspension, while about 50% remains behind as a deposit therein on the reactor parts. This can form a serious obstacle to the application of the polymerization on a commercial scale.

In the past the applicant has carried out an extensive investigation into this problem, from which it was found (see e.g. EP-A-0 404 228) that the reactor fouling can be effectively combated by employing as catalyst composition a supported dentate ligand that is insoluble or virtually insoluble in the diluent and that can be obtained by contacting a solid carrier comprising reactive groups with a dentate ligand that comprises at least two phosphorus-, nitrogen- and/or sulphur-containing dentate groups through which the dentate ligand can complex with the Group VIII metal component and that in addition to the dentate groups comprises a reactive group, in which contacting the reactive groups of the carrier react with those of the ligand.

In the course of continued research into the use of these solid dentate ligands as catalyst component in the preparation of the present alternating polymers it was surprisingly found that the average molecular weight of the polymers obtained is determined to a large extent by the average particle diameter of the solid carrier employed. Since, with a view to their possible applications, the present polymers are more valuable according as their average molecular weight is higher, this finding is considered very important. It was found that for the preparation of polymers having a high average molecular weight, catalyst compositions should be used in which a dentate ligand occurs that is applied to a solid carrier with an average particle diameter (d) which is larger than 500 µ. Catalyst compositions comprising a Group VIII metal component and a dentate ligand as described above that is deposited on a solid carrier having an average particle diameter >500 µ, are novel.

The present patent application therefore relates to novel catalyst compositions comprising a Group VIII metal component and a supported dentate ligand that can be obtained by contacting a solid carrier having an average particle diameter >500 µ and comprising reactive groups, with a dentate ligand that can complex via at least two phosphorus-, nitrogen- and/or sulphur-containing dentate groups present therein with the Group VIII metal component and that in addition to the dentate groups comprises a reactive group, in which contacting the reactive groups of the carrier react with those of the ligand. The patent application further relates to the use of these catalyst compositions in the preparation of polymers of carbon monoxide with one or more olefinically unsaturated compounds.

In addition to the possibility of preparing polymers with a high average molecular weight, the use of these catalyst compositions also offers the possibility of preparing very pure polymers. This can be explained as follows.

Hitherto, a drawback of the use of Group VIII metal-containing compositions as catalysts has been that the Group VIII metal component largely remains behind in the polymers and cannot be removed from them by washing. The presence of a Group VIII metal component in the polymers is undesirable for two reasons. Firstly, its presence creates problems in the processing of the generally high melting point polymers. This processing, for example by injection moulding, should take place in the molten state with the material being at a temperature at least 25°C above its melting point. The presence of the Group VIII metal component in the polymers makes them less resistant to the high temperatures required by the processing. Discoloration and decomposition of the polymers take place. The strong gelling that occurs greatly hinders the processing of the polymers. The processing problems are generally greater the more Group VIII metal component the polymers contain. The presence of the Group VIII metal component in the polymers is also undesirable because this removes Group VIII metal component from the preparation process, that in turn has to be replenished from outside. This second drawback is particularly significant if a noble metal such as palladium is employed as Group VIII metal. Particularly in those cases in which practically all the Group VIII metal component used ends up in the prepared polymer, this phenomenon can entail very high costs if a noble metal is used as Group VIII metal, in view of the price of this metal. This can form a serious obstacle to the application of the polymerization on a commercial scale.

Both in the conventional preparation of the present polymers by contacting the monomers with a solution of the catalyst composition and in a process comprising contacting the monomers with a catalyst composition containing the dentate ligand deposited on a solid carrier, polymers are obtained whose average particle diameter is substantially less than 300 µ. In the previously discussed investigation by the applicant that led to the finding that the use of catalyst compositions containing a dentate ligand on a solid carrier provides an effective way of combating reactor fouling, carrier materials were used whose average particle diameter substantially corresponded to that of the polymers to be prepared. A drawback of the use of catalyst compositions containing a dentate ligand on a solid carrier is that the polymers obtained are contaminated with the carrier material. This applies both if the average particle diameter of the carrier material corresponds substantially to that of the polymers to be prepared and if the carrier material as now proposed according to the invention possesses an average particle diameter which is considerably larger than that of the polymers to be prepared. If a carrier material is used with an average particle diameter which corresponds substantially to that of the polymers to be prepared, the carrier material cannot be separated from the polymer in a simple manner, e.g. by sieving. If a catalyst composition according to the invention is used comprising a carrier material whose average particle diameter is considerably larger than that of the prepared polymers, this separation is, however, quite possible. Since in the catalyst compositions of the invention the dentate ligand and the Group VIII metal component occur chemically bonded to the carrier material, the removal of the carrier material from the prepared polymers results in the simultaneous removal of the Group VIII metal component.

To summarize, it can be stated that in comparison with a conventional polymer preparation in which the monomers are contacted with a solution of the catalyst composition, the polymer preparation using the novel catalyst compositions of the invention offers the following four advantages:
1) Considerably less reactor fouling takes place in the polymer preparation.
2) The prepared polymers possess a considerably higher average molecular weight.
3) After separation of the carrier material from the polymer/carrier mixture, polymers are obtained with a considerably lower content of Group VIII metal component.
4) The carrier material separated from the polymer/carrier mixture is loaded with catalyst which still possesses polymerization activity, so that this material is suitable for re-use in the polymerization.

As mentioned above, the catalyst compositions of the invention comprise a Group VIII metal component and a supported dentate ligand. In this patent application Group VIII metals are understood to be the noble metals ruthenium, rhodium, palladium, osmium, iridium and platinum, as well as the iron group metals iron, cobalt and nickel. In the catalyst compositions the Group VIII metal component is preferably selected from palladium, nickel and cobalt. Palladium is particularly preferred as Group VIII metal. The Group VIII metal component is preferably incorporated in the catalyst compositions in the form of a salt of a carboxylic acid of up to six carbon atoms, in particular in the form of an acetate.

Although dentate ligands comprising more than two dentate groups are also eligible, bidentate ligands are preferred for use in the present compositions.

As examples of solid carrier materials containing reactive groups which can react with a reactive group present in a dentate ligand, the following can be mentioned:
1) Carrier materials containing carbonyl groups as reactive groups, such as a linear alternating carbon monoxide/ethene copolymer.
2) Carrier materials containing hydroxyl groups as reactive groups, such as silica, alumina, silica-alumina and hydrogenated linear alternating carbon monoxide/ethene copolymers in which at least part of the carbonyl groups is converted to secondary alcohol groups.
3) Carrier materials containing carboxylic acid groups as reactive groups, such as ethene/methacrylic acid copolymers.
4) Carrier materials containing halogen-containing groups as reactive groups, such as chloromethyl-substituted polystyrenes and reaction products of silica with (2-chloroethyl)triethoxysilane.
5) Carrier materials containing isocyanate groups as reactive groups, such as poly[methylene(polyphenylisocyanate)].

As examples of bidentate ligands which in addition to the two dentate groups contain a reactive group that can react with a reactive group present in a solid carrier material, the following can be mentioned:
A) Bidentate ligands containing as reactive group a hydroxyl group such as 2-hydroxy-1,3-bis[bis(2-methoxyphenyl)phosphino]propane and 7-bis(2-methoxyphenyl)phosphinomethyl-8-bis(2-methoxyphenyl) phosphinooctanol-1.
B) Bidentate ligands containing as reactive group a trialkoxysilyl group such as the reaction product of (3-isocyanatopropyl)triethoxysilane with 2-hydroxy-1,3-bis[bis(2-methoxyphenyl)phosphino]propane or with 7-bis(2-methoxyphenyl)phosphinomethyl-8-bis(2-methoxyphenyl) phosphinooctanol-1.
C) Bidentate ligands containing as reactive group an amino group such as 5-amino-1,10-phenanthroline.

As examples of suitable combinations of a carrier material and a bidentate ligand which can be employed in the preparation of a supported bidentate ligand suitable for use in the catalyst compositions of the invention can be mentioned:

A carrier material from class 1) and a bidentate ligand from class C) with which a supported bidentate ligand can be obtained in which the bidentate ligand molecules occur linked via pyrrole rings to the carrier.

A carrier material from class 3) and a bidentate ligand from class C) with which a supported bidentate ligand can be obtained in which the bidentate ligand molecules occur linked via amide groups to the carrier.

A carrier material from class 5) and a bidentate ligand from class A) with which a supported bidentate ligand can be obtained in which the bidentate ligand molecules occur linked via carbamate groups to the carrier.

A carrier material from class 4) and a bidentate ligand from class A) with which a bidentate ligand on carrier can be obtained in which the bidentate ligand molecules occur linked via ether groups to the carrier.

In the preparation of the bidentate ligands on carrier suitable for use in the catalyst compositions of the invention, a bidentate ligand is used that via two phosphorus-, nitrogen- or sulphur-containing dentate groups present therein can form a complex with the Group VIII metal. If a nitrogen bidentate ligand is used for this purpose, there is preference for a compound of the general formula 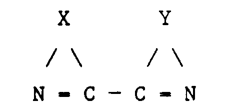 in which X and Y represent organic bridging groups containing three or four atoms in the bridge, of which at least two are carbon atoms and in one of the two bridging groups a reactive group is present that can react with a reactive group in the solid carrier. An example of such a compound is 5-amino-1,10-phenanthroline. If a sulphur bidentate ligand is chosen for the preparation of the bidentate ligand on carrier, a compound is preferred of the general formula R¹S-R-SR¹ in which R¹ represents an optionally polar substituted hydrocarbyl group and R represents a divalent organic bridging group containing at least two carbon atoms in the bridge, in which bridging group a reactive group is present that can react with a reactive group in the solid carrier. An example of such a compound is 2-hydroxy-1,3-bis(phenylthio)propane.

Preferably, a phosphorus bidentate ligand is chosen for the preparation of the bidentate ligand on carrier. If such a bidentate ligand is employed, there is further preference for a compound of the general formula (R¹)₂P-R-P(R¹)₂ in which R and R¹ have the previously indicated meanings. In this case there is particular preference for a compound in which R¹ represents an aryl group of e.g. up to 12 carbon atoms, having an alkoxy group as substituent at the ortho position relative to the phosphorus atom to which it is linked and in which R contains three atoms in the bridge, of which the second atom contains a substituent in which the reactive group is present which can react with a reactive group in the solid carrier. Examples of such compounds are 2-hydroxy-1,3-bis[bis(2-methoxyphenyl)phosphino]propane and 7-bis(2-methoxyphenyl)phosphinomethyl-8-bis(2-methoxyphenyl)- phosphino-octanol-1. These phosphorus bidentate ligands contain as reactive group a hydroxyl group and therefore belong to the previously mentioned class A. By contacting these phosphorus bidentate ligands with a (ω-isocyanatoalkyl)trialkoxysilane such as (3-isocyanatopropyl)triethoxysilane, reaction takes place between the hydroxyl group in the bidentate ligand and the isocyanate group in the silane under formation of a carbamate bond and phosphorus bidentate ligands are formed which contain a trialkoxysilyl group as reactive group and therefore belong to the previously mentioned class B. Very suitable bidentate ligands on carrier for application as a component in the catalyst compositions of the invention can be obtained by reacting the thus prepared phosphorus bidentate ligands containing a trialkoxysilyl group as reactive group with a silica or silica-alumina carrier.

Carrier materials which are eligible for application in the preparation of the dentate ligand on carrier as catalyst components should have an average particle diameter of more than 500 µ. There is preference for carriers with an average particle diameter >750 µ and in particular >1 mm.

Preferably a quantity of the dentate ligand on carrier is used in the catalyst compositions of the invention such that the composition contains 1-10 g.atom and in particular 2-5 g.atom phosphorus, nitrogen and/or sulphur present in dentate groups per g.atom Group VIII metal.

In addition to a Group VIII metal component and a dentate ligand on carrier, the catalyst compositions of the invention preferably contain an anion of an acid with a pKa of less than 4 and in particular an anion of an acid with a pKa of less than 2. Examples of suitable acids with a pKa of less than 2 are sulphonic acids such as para-toluenesulphonic acid and halogen carboxylic acids such as trifluoroacetic acid. The anion of an acid with a pKa of less than 4 can be incorporated in the catalyst compositions in the form of an acid and/or in the form of a salt such as a copper or nickel salt. The anion is preferably present in the catalyst compositions in a quantity of 1-100 and in particular 2-50 mol per g.atom Group VIII metal.

To enhance the activity of the catalyst compositions of the invention, an organic oxidizing agent can also be incorporated therein. 1,4-quinones such as 1,4-benzoquinone and 1,4-naphthoquinone are very suitable for this purpose. The quantity of organic oxidizing agent used preferably amounts to 5-5,000 and in particular 10-1,000 mol per g.atom Group VIII metal.

The polymer preparation using the catalyst compositions of the invention is preferably carried out by contacting the monomers at elevated temperature and pressure with a suspension of the catalyst composition in a diluent in which the polymers are insoluble or virtually insoluble. Very suitable diluents are lower aliphatic alcohols such as methanol. If desired, the polymer preparation can also be carried out as gas phase polymerization. The polymerization can take place both batchwise and continuously.

As olefinically unsaturated compounds that with the aid of the catalyst compositions of the invention can be polymerized with carbon monoxide, compounds consisting exclusively of carbon and hydrogen as well as compounds which, in addition to carbon and hydrogen, contain one or more hetero-atoms are eligible. The catalyst compositions according to the invention are preferably applied for the preparation of polymers of carbon monoxide with one or more olefinically unsaturated hydrocarbons. Examples of suitable hydrocarbon monomers are ethene and α-olefins such as propene, butene-1, hexene-1 and octene-1, styrene, norbornene and dicyclopentadiene. The catalyst compositions of the invention are in particular very suitable for application in the preparation of copolymers of carbon monoxide with ethene and in the preparation of terpolymers of carbon monoxide with ethene and with an α-olefin, in particular propene.

The quantity of catalyst composition used in the preparation of the polymers may vary within wide limits. Per mol of olefinically unsaturated compound to be polymerized a quantity of catalyst composition is used which preferably contains 10⁻⁷ to 10⁻³ and in particular 10⁻⁶ to 10⁻⁴ g.atom Group VIII metal.

The preparation of the polymers is preferably carried out at a temperature of 25 to 150°C and a pressure of 2 to 150 bar and in particular at a temperature of 30 to 130°C and a pressure of 5 to 100 bar. As regards the separation of the reaction product obtained from the polymerization into a polymer fraction containing the smaller particles and a catalyst fraction containing the larger particles, two cases can be distinguished, depending on whether the separation is applied either to the dry reaction product after it has been isolated from a suspension by, for example, filtering, washing and drying or is obtained as such in a gas phase polymerization, or to a polymer suspension as it leaves the reactor. If it is intended to separate the reaction product as dry material, this separation can, inter alia, be conducted by sieving, by fluidization, by pneumatic segregation or by employing cyclones. For separating a polymer suspension, centrifuges, sieves and fluidizers are, inter alia, eligible. Preferably, the separation is conducted with the aid of hydrocyclones with which the suspension can be separated into a suspension containing the catalyst and a suspension containing the polymer. The availability of the catalyst in the form of a suspension in the diluent is advantageous if it is intended to re-use the catalyst in the polymerization, either by recirculation in a continuous process or by employing it in a subsequent batchwise operation.

The higher the average molecular weight of the polymers prepared according to the invention, the higher will also be their intrinsic viscosity. Hereinafter in this patent application instead of "intrinsic viscosity" the designation "Limiting Viscosity Number" (LVN) recommended by the IUPAC will be used. The stated LVNs were determined at 60°C in metacresol as solvent.

The invention will be illustrated further by the following examples.

### Example 1

A supported phosphorus bidentate ligand was prepared as follows. A mixture of 5.49 g 2-hydroxy-1,3-bis[bis(2-methoxyphenyl)phosphino]propane, 2.47 g (3-isocyanatopropyl)triethoxysilane and 100 ml para-xylene was boiled under reflux for 12 hours. After adding 38.56 g silica with an average particle diameter of 100 µ, the mixture was again boiled under reflux for 12 hours. The solid phosphorus bidentate ligand was filtered off, washed with para-xylene and dried.

### Example 2

A palladium/phosphorus bidentate ligand composition was prepared as follows. A mixture of 5.15 g of the solid phosphorus bidentate ligand was prepared according to example 1, 37 mg palladium acetate and 50 ml methanol was stirred for 16 hours at room temperature. The resulting palladium/phosphorus bidentate ligand composition was filtered off and dried. The composition contained 4.33 mg palladium/g.

### Example 3

A carbon monoxide/ethene copolymer was prepared as follows. Into a stirred autoclave with a volume of 300 ml was introduced 180 ml methanol. After the contents of the autoclave had been brought to 80°C, a 1:1 carbon monoxide/ethene mixture was forced in until a pressure of 60 bar was reached. Then a catalyst solution with the following composition was introduced into the autoclave:
24.5 ml methanol,
1.5 ml toluene,
0.01 mmol palladium acetate,
0.011 mmol 1,3-bis[bis(2-methoxyphenyl)phosphino]propane, and
0.20 mmol trifluoroacetic acid.

After 3 hours the polymerization was terminated by cooling to room temperature and releasing the pressure.

A polymer suspension was obtained containing 10.7 g copolymer. 1.9 g copolymer was left behind in the autoclave. The reactor fouling in this experiment therefore amounted to$\frac{\text{1.9}}{\text{10.7+1.9}} \text{x 100% = 15%}$ The polymerization rate was 4.0 kg copolymer/(g palladium.hour). The copolymer had an LVN(60) of 1.6 dl/g and a palladium content of 80 ppmw (parts per million by weight).

### Example 4

A carbon monoxide/ethene copolymer was prepared in substantially the same way as in example 3, but with the following differences:
a) the reaction temperature was 90°C instead of 80°C, and
b) the reaction time was 2.5 hours instead of 3 hours.

The yield was 12.9 g copolymer, the reactor fouling was 10% and the polymerization rate was 4.9 kg copolymer/(g palladium.hour). The copolymer had an LVN(60) of 1.1 dl/g and a palladium content of 60 ppmw.

### Example 5

A carbon monoxide/ethene copolymer was prepared as follows. Into a stirred autoclave with a volume of 300 ml was introduced 220 ml methanol, 439 mg of the palladium/phosphorus bidentate ligand composition prepared according to example 2 and 0.039 mmol trifluoroacetic acid. After the contents of the autoclave had been brought to 90°C, a 1:1 carbon monoxide/ethene mixture was forced in until a pressure of 55 bar was reached. The pressure in the autoclave was maintained by forcing in a 1:1 carbon monoxide/ethene mixture. After 5.52 hours the polymerization was terminated by cooling to room temperature and releasing the pressure. The yield was 10.5 g copolymer, the reactor fouling was 0.9% and the polymerization rate was 1.0 kg copolymer/(g palladium.hour). The copolymer had an LVN(60) of 1.3 dl/g, a palladium content of 180 ppmw and a silicon content of 19000 ppmw.

### Example 6

A supported phosphorus bidentate ligand was prepared as follows. A mixture of 4.87 g 2-hydroxy-1,3-bis[bis(2-methoxyphenyl)phosphino] propane, 2.48 g (3-isocyanatopropyl)triethoxysilane and 75 ml meta-xylene was boiled under reflux for 24 hours. After adding 11.8 g silica with an average particle diameter of 2.3 mm, the mixture was again boiled under reflux for 24 hours. The solid phosphorus bidentate ligand was filtered off, washed with meta-xylene and dried. It contained 10 mg phosphorus/g carrier.

### Example 7

A palladium/phosphorus bidentate ligand/trifluoroacetic acid catalyst composition was prepared as follows. A mixture of 300 mg of the solid phosphorus bidentate ligand prepared according to example 6, 10.3 mg palladium acetate, 0.09 ml trifluoroacetic acid and 30 ml acetone was stirred for 5 hours at room temperature. The resulting composition was filtered off, washed with acetone and dried. The composition contained 8 mg palladium/g carrier.

### Example 8

A carbon monoxide/ethene copolymer was prepared in substantially the same way as in example 3, but with the following differences:
a) the reaction temperature was 90°C instead of 80°C, and
b) 150 mg of the catalyst composition prepared according to example 7 was introduced into the autoclave instead of the catalyst solution.

The yield was 9.5 g copolymer, the reactor fouling was 3% and the polymerization rate was 2.6 kg copolymer/(g palladium.hour). After sieving the polymer suspension over a sieve with a mesh size of 1.2 mm, the polymer was filtered off, washed with methanol and dried. The resulting copolymer had an LVN(60) of 4.3 dl/g and a palladium content of 35 ppmw.

### Example 9

A phosphorus bidentate ligand on carrier was prepared as follows. A mixture of 3.24 g 2-hydroxy-1,3-bis[bis(2-methoxyphenyl)phosphino] propane, 1.57 g (3-isocyanatopropyl)triethoxysilane and 50 ml meta-xylene was boiled under reflux for 24 hours. After adding 4 g silica-alumina with an average particle diameter of 2 mm and an alumina content of 6.5 %w, the mixture was again boiled under reflux for 24 hours. The solid phosphorus bidentate ligand was filtered off, washed with meta-xylene and dried. It contained 24 mg phosphorus/g carrier.

### Example 10

A palladium/phosphorus bidentate ligand/trifluoroacetic acid catalyst composition was prepared as follows. A mixture of 1000 mg of the solid phosphorus bidentate ligand prepared according to example 9, 87 mg palladium acetate, 0.35 ml trifluoroacetic acid and 30 ml acetone was stirred for 5 hours at room temperature. The resulting composition was filtered off, washed with acetone and dried. The composition contained 14 mg palladium/g carrier.g

### Example 11

A carbon monoxide/ethene copolymer was prepared in substantially the same way as in example 8, but with the following differences:
a) 70 mg of the catalyst composition prepared according to example 10 was introduced into the autoclave instead of the one prepared according to example 7, and
b) the reaction time was 6 hours instead of 3 hours.

The yield was 2.5 g copolymer, the reactor fouling was 2% and the polymerization rate was 0.4 kg copolymer/(g palladium.hour). The resulting copolymer had an LVN(60) of 3.0 dl/g and a palladium content of 25 ppmw.

### Example 12

A phosphorus bidentate ligand on carrier was prepared in substantially the same way as in example 9, but with the difference that the silica-alumina had been pretreated with hydrochloric acid. The solid phosphorus bidentate ligand contained 25 mg phosphorus/g carrier.

### Example 13

A palladium/phosphorus bidentate ligand/trifluoroacetic acid catalyst composition was prepared in substantially the same way as in example 10, but with the difference that the solid phosphorus bidentate ligand prepared according to example 12 was used instead of the one prepared according to example 9. The resulting composition contained 5 mg palladium/g carrier.

### Example 14

A carbon monoxide/ethene copolymer was prepared in substantially the same way as in example 8, but with the following differences:
a) 80 mg of the catalyst composition prepared according to example 13 was introduced into the autoclave instead of the one prepared according to example 7, and
b) the reaction time was 6 hours instead of 3 hours.

The yield was 3.5 g copolymer, the reactor fouling was 1% and the polymerization rate was 1.5 kg copolymer/(g palladium.hour). The resulting copolymer had an LVN(60) of 2.7 dl/g and a palladium content of 30 ppmw.

### Example 15

A phosphorus bidentate ligand on carrier was prepared as follows. A mixture of 3.24 g 2-hydroxy-1,3-bis[bis(2-methoxyphenyl)phosphino] propane, 1.57 g (3-isocyanatopropyl)triethoxysilane and 50 ml meta-xylene was boiled under reflux for 24 hours. After adding 7.5 g silica with an average particle diameter of 2.3 mm the mixture was boiled under reflux for a further 50 hours. The solid phosphorus bidentate ligand was filtered off, washed with meta-xylene and dried. It contained 12 mg phosphorus/g carrier.

### Example 16

A palladium/phosphorus bidentate ligand/trifluoroacetic acid catalyst composition was prepared as follows. A mixture of 760 mg of the solid phosphorus bidentate ligand prepared according to example 15, 36 mg palladium acetate, 0.16 ml trifluoroacetic acid and 30 ml acetone was stirred for 5 hours at room temperature. The resulting composition was filtered off, washed with acetone and dried. The composition contained 7 mg palladium/g carrier.

### Example 17

A carbon monoxide/ethene copolymer was prepared in substantially the same way as in example 8, but with the following differences:
a) 100 mg of the catalyst composition prepared according to example 16 was introduced into the autoclave instead of the one prepared according to example 7,
b) the reaction temperature was 80°C instead of 90°C, and
c) the reaction time was 10 hours instead of 3 hours.

The yield was 3.6 g copolymer, the reactor fouling was 5% and the polymerization rate was 0.5 kg copolymer/(g palladium.hour). The resulting copolymer had an LVN(60) of 5.3 dl/g, a palladium content of 15 ppmw and a silicon content of 353 ppmw. The separated catalyst composition contained 0.7 mg palladium.

### Example 18

A carbon monoxide/ethene copolymer was prepared in substantially the same way as in example 8, but with the following differences:
a) 100 mg of the catalyst composition prepared according to example 16 was introduced into the autoclave instead of the one prepared according to example 7, and
b) the reaction time was 6 hours instead of 3 hours.

The yield was 8.8 g copolymer, the reactor fouling was 1% and the polymerization rate was 2.1 kg copolymer/(g palladium.hour). The resulting copolymer had an LVN(60) of 3.1 dl/g, a palladium content of 14 ppmw and a silicon content of 242 ppmw. The separated catalyst composition contained 0.6 mg palladium.

### Example 19

A palladium/phosphorus bidentate ligand/trifluoroacetic acid catalyst composition was prepared as follows. A mixture of 500 mg of the solid phosphorus bidentate ligand prepared according to example 15, 26 mg palladium acetate, 0.116 ml trifluoroacetic acid and 30 ml acetone was stirred for 5 hours at room temperature. The resulting composition was filtered off, washed with acetone and dried. The composition contained 9 mg palladium/g carrier.

### Example 20

A carbon monoxide/ethene copolymer was prepared in substantially the same way as in example 8, but with the following differences:
a) 120 mg of the catalyst composition prepared according to example 19 was introduced into the autoclave instead of the
one prepared according to example 7, and b) the reaction time was 6 hours instead of 3 hours.

The yield was 4.5 g copolymer, the reactor fouling was 4% and the polymerization rate was 0.7 kg copolymer/(g palladium.hour). The resulting copolymer had an LVN(60) of 3.1 dl/g, a palladium content of 28 ppmw and a silicon content of 205 ppmw. The separated catalyst composition contained 1.0 mg palladium.

### Example 21

A carbon monoxide/ethene copolymer was prepared in substantially the same way as in example 8, but with the following differences:
a) 100 mg of the catalyst composition prepared according to example 19 was introduced into the autoclave instead of the one prepared according to example 7, and
b) the reaction time was 5 hours instead of 3 hours.

The yield was 4.0 g copolymer, the reactor fouling was 1% and the polymerization rate was 0.9 kg copolymer/(g palladium.hour). The resulting copolymer had an LVN(60) of 2.8 dl/g and a palladium content of 19 ppmw. The separated catalyst composition contained 0.8 mg palladium.

### Example 22

A palladium/phosphorus bidentate ligand/para-toluenesulphonic acid catalyst composition was prepared as follows. A mixture of to example 15, 25 mg palladium acetate, 250 ml para-toluenesulphonic acid and 30 ml acetone was stirred for 5 hours at room temperature. The resulting composition was filtered off, washed with acetone and dried. The composition contained 7 mg palladium/g carrier.

### Example 23

A carbon monoxide/ethene copolymer was prepared in substantially the same way as in example 8, but with the following differences:
a) 100 mg of the catalyst composition prepared according to example 22 was introduced into the autoclave instead of the one prepared according to example 7, and
b) the reaction time was 5 hours instead of 3 hours.

The yield was 4.7 g copolymer, the reactor fouling was 5% and the polymerization rate was 1.3 kg copolymer/(g palladium.hour). The resulting copolymer had an LVN(60) of 2.4 dl/g, a palladium content of 21 ppmw and a silicon content of 297 ppmw.

### Example 24

A palladium/phosphorus bidentate ligand/trifluoroacetic acid catalyst composition was prepared as follows. A mixture of 207 mg of the solid phosphorus bidentate ligand prepared according to example 15, 10 mg palladium acetate, 0.045 ml trifluoroacetic acid and 30 ml acetone was stirred for 5 hours at room temperature. The resulting composition was filtered off, washed with acetone and dried. The composition contained 11 mg palladium/g carrier.

### Example 25

A carbon monoxide/ethene copolymer was prepared in substantially the same way as in example 8, but with the following differences:
a) 90 mg of the catalyst composition prepared according to example 24 was introduced into the autoclave instead of the one prepared according to example 7, and
b) the reaction time was 5 hours instead of 3 hours.

The yield was 3.1 g copolymer, the reactor fouling was 2% and the polymerization rate was 0.6 kg copolymer/(g palladium.hour). The resulting copolymer had an LVN(60) of 4.1 dl/g and a palladium content of 31 ppmw. The separated catalyst composition contained 0.8 mg palladium.

### Example 26

A supported phosphorus bidentate ligand was prepared as follows. A mixture of 4.0 g 7-bis(2-methoxyphenyl)phosphinomethyl-8-bis- (2-methoxyphenyl)phosphinooctanol-1, 1.57 g (3-isocyanatopropyl)- triethoxysilane and 50 ml meta-xylene was boiled under reflux for 24 hours. After adding 5 g silica with an average particle diameter of 2.3 mm the mixture was again boiled under reflux for 24 hours. The solid phosphorus bidentate ligand was filtered off, washed with meta-xylene and dried. It contained 14 mg phosphorus/g carrier.

### Example 27

A palladium/phosphorus bidentate ligand/trifluoroacetic acid catalyst composition was prepared as follows. A mixture of 551 mg of the solid phosphorus bidentate ligand prepared according to example 26, 34 mg palladium acetate, 0.15 ml trifluoroacetic acid and 30 ml acetone was stirred for 5 hours at room temperature. The resulting composition was filtered off, washed with acetone and dried. The composition contained 15 mg palladium/g carrier.

### Example 28

A carbon monoxide/ethene copolymer was prepared in substantially the same way as in example 8, but with the following differences:
a) 110 mg of the catalyst composition prepared according to example 27 was introduced into the autoclave instead of the one prepared according to example 7, and
b) the reaction time was 5 hours instead of 3 hours.

The yield was 3.1 g copolymer, the reactor fouling was 2% and the polymerization rate was 0.4 kg copolymer/(g palladium.hour). The resulting copolymer had an LVN(60) of 3.2 dl/g and a palladium content of 10 ppmw. The separated catalyst composition contained 1.6 mg palladium.

Of the examples 1-28, examples 6-28 are according to the invention. Examples 6, 9, 12, 15 and 26 relate to the preparation of bisphosphines containing a triethoxysilyl group as reactive group, as well as to the preparation of supported bidentate ligands by reaction of these bisphosphines with carriers having an average particle diameter > 500 µ. Examples 7, 10, 13, 16, 19, 22, 24 and 27 relate to the preparation of catalyst compositions using these supported bidentate ligands. Examples 8, 11, 14, 17, 18, 20, 21, 25 and 28 relate to the application of these catalyst compositions in the polymerization of carbon monoxide with ethene. Examples 1-5 have been included in the patent application for comparison. Example 1 relates to the preparation of a bisphosphine containing a triethoxysilyl group as reactive group, as well as to the preparation of a supported bidentate ligand by reaction of this bisphosphine with a carrier having an average particle diameter of 100 µ. In example 2 this bidentate ligand on carrier is combined with palladium to form a catalyst component. In example 5 this catalyst component forms part of a catalyst composition employed in the polymerization of carbon monoxide with ethene. Examples 3 and 4 relate to the conventional preparation of carbon monoxide/ethene copolymers by contacting the monomers with a solution of a catalyst composition.

In the conventional polymer preparations as described in examples 3 and 4, polymers were obtained with an LVN(60) of 1.6 and 1.1 dl/g respectively and a palladium content of 80 and 60 ppmw respectively. The reactor fouling was 15 and 10% respectively.

Although in the polymer preparation as described in example 5 using a catalyst composition containing a bidentate ligand on a silica carrier with an average particle diameter of 100 µ a reactor fouling of only 0.9% was observed, the product obtained had a palladium content of 180 ppmw and a silicon content of 19000 ppmw. The polymers had an LVN(60) of 1.3 dl/g and could not be separated from the silica by sieving.

In the polymerization using the catalyst compositions of the invention described in the working examples, polymers were prepared with an LVN(60) varying from 2.4 to 5.3 dl/g and a palladium content varying from 10 to 35 ppmw. From the palladium and silicon contents of the polymers and the palladium contents of the separated catalysts stated for the examples according to the invention it can be seen that according to the invention the catalyst can be recovered almost entirely from the polymer.

With the aid of ¹³C-NMR analysis it was established that the carbon monoxide/ethene copolymers prepared according to the examples consisted of linear chains in which the units from carbon monoxide on the one hand and the units from ethene on the other hand occurred in an alternating arrangement.

## Claims

1. Catalyst compositions which comprise a Group VIII metal component and a supported dentate ligand which is obtainable by contacting
1) a solid carrier comprising reactive groups, and
2) an unsupported dentate ligand comprising at least two phosphorus, nitrogen and/or sulphur containing dentate groups through which the dentate ligand can complex with the Group VIII metal component, and comprising, in addition to the dentate groups, a reactive group,
so that the reactive groups of the carrier react with those of the unsupported dentate ligand,
characterized in that the solid carrier has an average particle diameter of > 500 µ.

2. Catalyst compositions according to claim 1, characterized in that in the preparation of the dentate ligand on carrier use is made of a phosphorus bidentate ligand of the general formula (R¹)₂P-R-P(R¹)₂ in which R¹ represents an optionally polar substituted hydrocarbyl group and R represents a divalent organic bridging group containing at least two carbon atoms in the bridge, in which bridging group a reactive group is present that can react with a reactive group in the solid carrier.

3. Catalyst compositions according to claim 2, characterized in that in the general formula of the phosphorus bidentate ligand R¹ represents an aryl group having an alkoxy group as substituent at the ortho position relative to the phosphorus atom to which it is linked and in which the bridging group R contains three atoms in the bridge, of which the second atom carries a substituent in which the reactive group is present which can react with a reactive group in the solid carrier.

4. Catalyst compositions according to claim 3, characterized in that the phosphorus bidentate ligand contains a trialkoxysilyl group as reactive group and is obtained by reaction of a (ω-isocyanatoalkyl)trialkoxysilane with a 2-hydroxy-1,3-bis[bis-(2-alkoxyphenyl)phosphino]propane or with a 7-bis(2-alkoxyphenyl)-phosphinomethyl-8-bis(2-alkoxyphenyl)-phosphino-octanol-1.

5. Catalyst compositions according to claim 4, characterized in that the phosphorus bidentate ligand contains a triethoxysilyl group as reactive group and is obtained by reaction of (3-isocyanatopropyl)triethoxysilane with 2-hydroxy-1,3-bis[bis(2-methoxyphenyl)phosphino]propane or with 7-bis(2-methoxyphenyl)phosphinomethyl-8-bis(2-methoxyphenyl)-phosphino-octanol-1.

6. Catalyst compositions according to claim 4 or 5, characterized in that as supported dentate ligand they contain a reaction product of a silica or silica-alumina carrier with a phosphorus bidentate ligand as claimed in claim 4 or 5.

7. Catalyst compositions according to one or more of claims 1-6, characterized in that in the preparation of the dentate ligand on carrier use is made of a carrier material with an average particle diameter >750 µ.

8. Catalyst compositions according to one or more of claims 1-7, characterized in that they contain such a quantity of the supported dentate ligand that 1-10 g.atom phosphorus, nitrogen and/or sulphur in dentate groups is present per g.atom Group VIII metal.

9. Process for the preparation of polymers, characterized in that a mixture of carbon monoxide with one or more olefinically unsaturated compounds is contacted at elevated temperature and pressure with a catalyst composition according to one or more of claims 1-8 and that the catalyst particles are separated from the reaction product thus obtained that contains relatively small polymer particles and relatively large catalyst particles.

10. Process according to claim 9, characterized in that the monomers are contacted with a suspension of the catalyst composition in a diluent in which the polymers are insoluble or virtually insoluble, at a temperature of 25 to 150°C, a pressure of 2 to 150 bar and that per mol of olefinically unsaturated compound to be polymerized a quantity of catalyst composition is used which contains 10⁻⁷ to 10⁻³ g.atom Group VIII metal.

## Patentansprüche

1. Katalysatorzusammensetzungen, die eine Metallkomponente der Gruppe VIII und einen geträgerten zähnigen Liganden enthalten, der erhältlich ist, indem man
1) einen reaktive Gruppen enthaltenden festen Träger mit
2) einem ungeträgerten zähnigen Liganden, der mindestens zwei phosphor-, stickstoff- und/oder schwefelhaltige zähnige Gruppen, durch die der zähnige Ligand einen Komplex mit der Metallkomponente der Gruppe VIII bilden kann, und neben den zähnigen Gruppen eine reaktive Gruppe enthält, so daß die reaktiven Gruppen des Trägers reagieren mit denen des ungeträgerten zähnigen Liganden dadurch gekennzeichnet, daß der feste Träger einen mittleren Teilchendurchmesser > 500 µm aufweist.

2. Katalysatorzusammensetzungen nach Anspruch 1, dadurch gekennzeichnet, daß man bei der Herstellung des geträgerten zähnigen Liganden einen zweizähnigen Phosphorliganden der allgemeinen Formel (R¹)₂P-R-P(R¹)₂, worin R¹ einen gegebenenfalls polar substituierten Kohlenwasserstoffrest und R eine zweiwertige organische Brückengruppe mit mindestens zwei Kohlenstoffatomen in der Brücke bedeutet, wobei in der Brückengruppe eine reaktive Gruppe vorhanden ist, die mit einer reaktiven Gruppe des festen Trägers reagieren kann, einsetzt.

3. Katalysatorzusammensetzungen nach Anspruch 2, dadurch gekennzeichnet, daß in der allgemeinen Formel des zweizähnigen Phosphorliganden R¹ eine Arylgruppe mit einem Alkoxysubstituenten in ortho-Stellung zu dem Phosphoratom, an das sie gebunden ist, bedeutet und die Brückengruppe R drei Atome in der Brücke enthält, wovon das zweite Atom einen Substituenten trägt, in dem eine reaktive Gruppe vorhanden ist, die mit einer reaktiven Gruppe des festen Trägers reagieren kann.

4. Katalysatorzusammensetzungen nach Anspruch 3, dadurch gekennzeichnet, daß der zweizähnige Phosphorligand als reaktive Gruppe eine Trialkoxysilylgruppe enthält und durch die Umsetzung eines (ω-Isocyanatoalkyl)trialkoxysilans mit einem 2-Hydroxy-1,3-bis[bis(2-alkoxyphenyl)phosphino]propan oder einem 7-Bis(2-alkoxyphenyl)phosphinomethyl-8-bis(2-alkoxyphenyl)phosphinooctanol-1 erhalten wird.

5. Katalysatorzusammensetzungen nach Anspruch 4, dadurch gekennzeichnet, daß der zweizähnige Phosphorligand als reaktive Gruppe eine Triethoxysilylgruppe enthält und durch die Umsetzung von (3-Isocyanatopropyl)triethoxysilan mit 2-Hydroxy-1,3-bis[bis(2-methoxyphenyl)phosphino]propan oder 7-Bis(2-methoxyphenyl)phosphinomethyl-8-bis(2-methoxyphenyl)phosphinooctanol-1 erhalten wird.

6. Katalysatorzusammensetzungen nach Anspruch 4 oder 5, dadurch gekennzeichnet, daß sie als geträgerten zähnigen Liganden ein Reaktionsprodukt eines Siliciumoxid- oder Siliciumoxid-Aluminiumoxid-Trägers mit einem zweizähnigen Phosphorliganden gemäß Anspruch 4 oder 5 enthalten.

7. Katalysatorzusammensetzungen nach einem oder mehreren der Ansprüche 1-6, dadurch gekennzeichnet, daß man bei der Herstellung des geträgerten zähnigen Liganden ein Trägermaterial mit einem mittleren Teilchendurchmesser > 750 µm einsetzt.

8. Katalysatorzusammensetzungen nach einem oder mehreren der Ansprüche 1-7, dadurch gekennzeichnet, daß sie eine solche Menge an geträgertem zähnigen Liganden enthalten, daß pro Grammatom des Metalls der Gruppe VIII 1-10 Grammatom Phosphor, Stickstoff und/oder Schwefel in zähnigen Gruppen vorliegt.

9. Verfahren zur Herstellung von Polymeren, dadurch gekennzeichnet, daß man ein Gemisch aus Kohlenmonoxid und einer oder mehreren olefinisch ungesättigten Verbindungen bei erhöhter Temperatur und bei erhöhtem Druck mit einer Katalysatorzusammensetzung gemäß einem oder mehreren der Ansprüche 1-8 in Berührung bringt und daß man die Katalysatorteilchen vom so erhaltenen Reaktionsprodukt, das verhältnismäßig kleine Polymerteilchen und verhältnismäßig große Katalysatorteilchen enthält, abtrennt.

10. Verfahren nach Anspruch 9, dadurch gekennzeichnet, daß man die Monomere bei einer Temperatur von 25 bis 150°C und einem Druck von 2 bis 150 bar mit einer Suspension der Katalysatorzusammensetzung in einem Verdünnungsmittel, in dem die Polymere unlöslich oder schwer löslich sind, in Berührung bringt und daß man pro Mol zu polymerisierende olefinisch ungesättigte Verbindung eine Menge an Katalysatorzusammensetzung, die 10⁻⁷ bis 10⁻³ Grammatom des Metalls der Gruppe VIII enthält, einsetzt.

## Revendications

1. Compositions de catalyseurs comprenant une composante métal du Groupe VIII et un ligand denté supporté pouvant être obtenu par la mise en contact
1) d'un support solide comprenant des groupes réactifs, et
2) d'un ligand denté non supporté comprenant au moins deux groupes dentés phosphorés azotés et/ou soufrés par l'intermédiaire desquels le ligand denté peut se complexer avec la composante métal du Groupe VIII, et comprenant, en plus des groupes dentés, un groupe réactif, de façon que les groupes réactifs du support reagent avec ceux du ligand denté non supporté, caractérisées en ce que le support solide a un diamètre de particule moyen > 500 µ.

2. Compositions de catalyseurs selon la revendication 1, caractérisées en ce que dans la preparation du ligand denté sur support, on a recours à un ligand bidenté phosphoré de formule générale (R¹)₂P-R-P(R¹)₂ dans laquelle R¹ représente un groupe hydrocarbyle éventuellement substitué de manière polaire et R représente un groupe de pontage organique divalent contenant au moins deux atomes de carbone dans le pont, dans lequel groupe de pontage un groupe réactif est présent, pouvant réagir avec un groupe réactif dans le support solide.

3. Compositions de catalyseurs selon la revendication 2, caractérisées en ce que dans la formule générale du ligand bidenté phosphoré, R¹ représente un groupe aryle ayant un groupe alcoxy à titre de substituant en position ortho par rapport à l'atome de phosphore auquel il est lié et dans laquelle le groupe de pontage R contient trois atomes dans le pont, parmi lesquels le deuxième atome porte un substituant dans lequel le groupe réactif est présent, pouvant réagir avec un groupe réactif dans le support solide.

4. Compositions de catalyseurs selon la revendication 3, caractérisées en ce que le ligand bidenté phosphoré contient un groupe trialcoxysilyle à titre de groupe réactif et est obtenu par la réaction d'un (ω-isocyanatoalkyl)trialcoxysilane avec un 2-hydroxy-1,3-bis[bis(2-alcoxyphényl)phosphino]propane ou avec un 7-bis(2-alcoxyphényl)phosphinométhyl-8-bis(2-alcoxy-phényl)phosphinooctano1-1.

5. Compositions de catalyseurs selon la revendication 4, caractérisées en ce que le ligand bidenté phosphoré contient un groupe triéthoxysilyle à titre de groupe réactif et est obtenu par la réaction du (3-isocyanatopropyl)triéthoxysilane avec le 2-hydroxy-1,3-bis[bis(2-méthoxyphényl)phosphino]propane ou avec le 7-bis(2-méthoxyphényl)phosphinométhyl-8-bis(2-méthoxy-phényl)-phosphinooctanol-1.

6. Compositions de catalyseurs selon la revendication 4 ou 5, caractérisées en ce qu'elles contiennent à titre de ligand denté supporté un produit de réaction d'un support de silice ou de silice-alumine avec un ligand bidenté phosphoré selon la revendication 4 ou 5.

7. Compositions de catalyseurs selon l'une ou plusieurs des revendications 1-6, caractérisées en ce que dans la préparation du ligand denté sur support, on a recours à un matériau support ayant un diamètre de particule moyen > 750 µ.

8. Compositions de catalyseurs selon l'une ou plusieurs des revendications 1-7, caractérisées en ce qu'elles contiennent une quantité du ligand denté supporté telle que 1-10 g.atome de phosphore, d'azote et/ou de soufre dans les groupes dentés soient présents par g.atome de métal du Groupe VIII.

9. Procédé de préparation de polymères, caractérisé en ce qu'un mélange de monoxyde de carbone avec un ou plusieurs composés oléfiniquement insaturés est mis en contact à température et pression élevées avec une composition de catalyseur selon l'une ou plusieurs des revendications 1-8 et en ce que les particules de catalyseur sont séparées du produit de réaction ainsi obtenu qui contient des particules polymères relativement petites et des particules de catalyseur relativement grosses.

10. Procédé selon la revendication 9, caractérisé en ce que les monomères sont mis en contact avec une suspension de la composition de catalyseur dans un diluant dans lequel les polymères sont insolubles ou pratiquement insolubles, à une température de 25 à 150°C, une pression de 2 à 150 bars et en ce que, par mole de composé oléfiniquement insaturé à polymériser, on utilise une quantité de composition de catalyseur contenant 10⁻⁷ à 10⁻³ g.atome de métal du Groupe VIII.
